# EUROPEAN PATENT APPLICATION

(11) **EP 4 401 057 A1**
(43) Date of publication of application: **17.07.2024**
(21) Application number: 22866977.6
(22) Date of filing: 13.04.2022
(51) Int. Cl.: G07G 1/00, G07G 1/12

(54) **ACCOUNTING MACHINE, PROGRAM RECORDING MEDIUM, AND ACCOUNTING PROCESSING METHOD**

(30) Priority: 10.09.2021 JP 2021147584
(71) Applicant: Toshiba TEC Kabushiki Kaisha, Tokyo 141-8562 (JP)
(72) Inventor: HAYASHI, Yuji, Izunokuni-shi, Shizuoka 410-2392 (JP); AOYAMA, Eisuke, Tokyo 141-8562 (JP)
(74) Representative: Bandpay & Greuter
(86) International application number: PCT/JP2022/017721
(87) International publication number: WO 2023/037646

(57) **Abstract**

A checkout apparatus that can be used not only as a semi-self-type checkout apparatus but also as a terminal-input-type or full-self-type checkout apparatus is provided. The checkout apparatus includes a first processing unit, a second processing unit, and a switching unit. The first processing unit handles, based on data regarding a first product being purchased input with a registration apparatus, payment for the first product being purchased. The second processing unit handles, based on data regarding a second product being purchased input with a terminal or device other than the registration apparatus, payment for the second product being purchased. The switching unit switches between, according to an operation input via an operating element, enabling the first processing unit to handle the payment and enabling the second processing unit to handle the payment.

## Description

### FIELD

Embodiments of the present invention relate to a checkout apparatus, a program recording medium, and a checkout processing method.

### BACKGROUND

In recent years, a semi-self-type transaction processing system has been known as a transaction processing system for mass retailers. In a semi-self-type transaction processing system, a registration apparatus with which data regarding a product being purchased is input and a checkout apparatus with which a payment for the product being purchased is handled are separated in each transaction. Such apparatuses are arranged in such a manner that a store employee operates the registration apparatus and a customer operates the checkout apparatus.

With the semi-self-type transaction processing system, in which an input operation of data regarding a product being purchased is performed by a store employee, the time required for data inputting is shortened, compared to a full-self-type transaction processing system in which a customer performs an input operation on his/her own.

On the other hand, a terminal-input-type transaction processing system has also been known, in which, in a selling space where products are displayed, a customer operates a communication terminal such as a smartphone, a tablet terminal, etc. on his/her own to input data regarding the product being purchased by himself/herself, and also operates a dedicated checkout apparatus by himself/herself to pay for the product being purchased. With the terminal-input-type transaction processing system, in which a customer inputs data regarding the product being purchased in a selling space, a registration apparatus conventionally operated by a store employee can be eliminated.

Usually, a checkout apparatus in a semi-self-type transaction processing system and a checkout apparatus in a terminal-input-type transaction processing system have an identical hardware configuration. In addition, such checkout apparatuses can be utilized as full-self-type checkout apparatuses. Accordingly, a management is desired in which, for example, such apparatuses are used as semi-self-type checkout apparatuses during busy times when there are many customers to speed up customer handling, but are used as terminal-input-type or full-self-type checkout apparatuses during off-peak times when there are few customers to reduce the number of employees.

### CITATION LIST

### PATENT LITERATURE

Patent Literature 1: Japanese Patent Application KOKAI Publication No. 2017-016413

### SUMMARY

A problem to be solved by embodiments of the present invention is to provide a checkout apparatus that can be used not only as a semi-self-type checkout apparatus but as a terminal-input-type or full-self-type checkout apparatus, a program recording medium, and a checkout processing method.

### BRIEF DESCRIPTION OF THE DRAWINGS

FIG. 1 is a schematic diagram showing a schematic configuration of a transaction processing system.
FIG. 2 is a block diagram showing a main circuit configuration of a checkout apparatus.
FIG. 3 is a schematic diagram showing a main program structure of the checkout apparatus.
FIG. 4 is a sequence diagram showing an example of communications regarding a semi-self-type transaction processing system.
FIG. 5 is a sequence diagram showing an example of communications regarding an individual-input-type transaction processing system.
FIG. 6 is a flowchart showing a procedure for information processing executed by a processor of the checkout apparatus in accordance with a mode setting program.
FIG. 7 is a flowchart showing a procedure for information processing executed by the processor of the checkout apparatus in accordance with a first settlement engine program.
FIG. 8 is a flowchart showing a procedure for information processing executed by the processor of the checkout apparatus in accordance with a second settlement engine program.
FIG. 9 is a flowchart showing a procedure for information processing executed by the processor of the checkout apparatus in accordance with a third settlement engine program.
FIG. 10 is a sequence diagram showing an example of communications regarding a semi-self-type transaction processing system according to a second embodiment.
FIG. 11 is a block diagram showing a main circuit configuration of a checkout apparatus according to the second embodiment.
FIG. 12 is a flowchart showing a procedure for information processing executed by a processor of the checkout apparatus in accordance with a first settlement engine program according to the second embodiment.
FIG. 13 is a flowchart showing a procedure for information processing executed by the processor of the checkout apparatus in accordance with a second settlement engine program according to the second embodiment.
FIG. 14 is a flowchart showing a procedure for information processing executed by the processor of the checkout apparatus in accordance with a third settlement engine program according to the second embodiment.

### DETAILED DESCRIPTION

According to an embodiment, a checkout apparatus configuring a system together with a registration apparatus with which data regarding one or more products being purchased is input, and configured to handle payment for the one or more products being purchased, includes a first processing unit, a second processing unit, a switching unit. The first processing unit is configured to handle, based on data regarding a first product being purchased input with the registration apparatus, payment for the first product being purchased. The second processing unit is configured to handle, based on data regarding a second product being purchased input with a terminal or a device other than the registration apparatus, payment for the second product being purchased. The switching unit is configured to switch between, according to an operation input via an operating element, enabling the first processing unit to handle the payment and enabling the second processing unit to handle the payment.

Hereinafter, embodiments of a checkout apparatus will be described with reference to the drawings.

In the present embodiment, a case is exemplified where a semi-self-type transaction processing system, a terminal-input-type transaction processing system, and a full-self-type transaction processing system are used in combination in a single store. The semi-self-type transaction processing system is a transaction processing system in which a store employee inputs data regarding a product being purchased with a registration apparatus, and a customer pays for the product being purchased with a checkout apparatus. The terminal-input-type transaction processing system is a transaction processing system in which a customer inputs data regarding a product being purchased utilizing a movable communication terminal, such as a smartphone, or a tablet terminal, or the like in a selling space where products are displayed, and pays for the product being purchased with a checkout apparatus. The full-self transaction processing system is a system in which a customer inputs data regarding a product being purchased and pays for the product being purchased with a single checkout apparatus. The checkout apparatus used in either of the transaction processing systems has an identical hardware configuration.

It is to be noted that a terminal-input-type transaction processing system, in which a customer inputs data regarding a product being purchased and pays for the product being purchased by himself/herself, can also be regarded as a full-self-type transaction processing system. Hereinafter, for distinction, a transaction processing system that uses a communication terminal will be referred to as an "individual-input-type transaction processing system", and a full-self transaction processing system that employs a single checkout apparatus will be referred to as a "continuous-input-type transaction processing system".

### [First Embodiment]

### <Description of Configuration of Transaction Processing System>

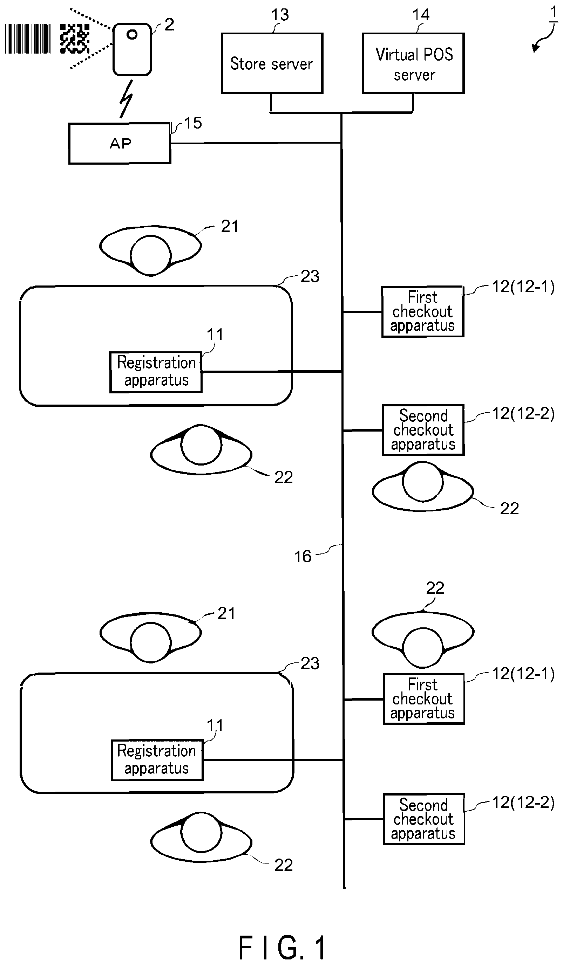

FIG. 1 is a schematic diagram showing a schematic configuration of a transaction processing system 1 according to a first embodiment. The transaction processing system 1 includes one or more registration apparatuses 11, one or more checkout apparatuses 12, a store server 13, a virtual POS server 14, an access point 15, and a network 16 making connections therebetween. The network 16 is not particularly limited in terms of its type; however, a wired or wireless local area network (LAN) is generally applied.

In the transaction processing system 1, the registration apparatuses 11 and the checkout apparatuses 12 are components configuring a semi-self-type transaction processing system. The checkout apparatuses 12 and the virtual POS server 14 are components configuring an individual-input-type transaction processing system, together with a communication terminal 2 connected by wireless communications via the access point 15. The checkout apparatuses 12 can also be regarded as components configuring a continuous-input-type transaction processing system. The store server 13 relates to all of the semi-self-type, continuous-input-type, and individual-input-type transaction processing systems.

The registration apparatus 11 is operated by a store employee 21, who plays a role called a checker. The checkout apparatus 12 is operated by, in principle, a consumer ("customer 22") who purchases a product at a store. The registration apparatus 11 is attached to a work table 23 in FIG. 1. The work table 23 has a rectangular top plate. A plurality of work tables 23 are arranged in such a manner that longitudinal directions of the top plates are approximately parallel to one another, thereby forming a path ("checkout lane") for the customer 22.

The registration apparatuses 11 and the checkout apparatuses 12 are arranged for each checkout lane in the store. For each checkout lane, a single registration apparatus 11 and two checkout apparatuses 12 are arranged. Hereinafter, one of the checkout apparatuses 12 will be referred to as a "first checkout apparatus 12-1", and the other checkout apparatus 12 will be referred to as a "second checkout apparatus 12-2". A variety of data signals are exchanged through the network 16 between the registration apparatus 11 and the checkout apparatuses 12 (12-1 and 12-2) arranged in the same checkout lane. The data signals may be exchanged via the store server 13, or without intervention of the store server 13.

In FIG. 1, an example is shown in which a single registration apparatus 11 and two checkout apparatuses 12 (12-1 and 12-2) are arranged for each of two checkout lanes. The number of checkout apparatuses 12 arranged in a single checkout lane is not limited to two. Three or more checkout apparatuses 12 may be arranged. Moreover, there may be a case where data is exchanged through the network 16 between a registration apparatus 11 and a checkout apparatus 12 arranged in different checkout lanes.

The store server 13 includes a product master file. The product master file may be stored in a storage device built into the store server 13, or may be stored in a storage device connected to an outside of the store server 13 .

The product master file is a data file configured to store a product record created for each product being sold at the store. The product record is a data record describing product data such as a product code, a product name, a unit price, an attribute, etc.

The product code is a unique code set for each product to identify the product. Usually, each product is given a barcode or a two-dimensional code representing a product code. The registration apparatus 11 is configured to read, with a reading device, a barcode or a two-dimensional code given to a product being purchased, thereby inputting a product code of the product in a transaction.

The product name and the unit price are the name of the product identified by the product code and its price per unit, respectively. The attribute is, for example, tax-related information of the product. The tax-related information includes a tax rate, a tax type (exclusive, inclusive, or non-taxable), etc.

The virtual POS server 14 is a computer that cooperates with the communication terminal 2 to provide support for making it appear as if a well-known POS terminal were operating. The virtual POS server 14 has, for example, the following three functions. The first function is a function of registering, in a transaction file, product sales data of a product identified by a product code input via the communication terminal 2. The second function is a function of displaying a registration screen created based on the product sales data registered in the transaction file on a display device of the communication terminal 2. The third function is a function of creating a checkout barcode in response to a checkout instruction from the communication terminal 2, associating the checkout barcode with the transaction file, and displaying the checkout barcode on the display device of the communication terminal 2.

The access point 15 is a communication facility installed in the store as a relay base at the time of the communication terminal 2 performing data communications with the virtual POS server 14 via a wireless LAN. The wireless LAN is compliant with, for example, the standards of Wi-Fi (registered trademark). FIG. 1 shows only one access point 15; however, the number of access points 15 is not limited thereto. Depending on the scale, etc. of the store, a plurality of access points 15 may be connected to the network 16.

The communication terminal 2 is a terminal utilized by a customer to input, by himself/herself, data regarding a product being purchased at a selling space where products are displayed. The communication terminal 2 is a portable terminal equipped with an imaging device necessary for reading a code symbol such as a two-dimensional code, a barcode, etc., as well as an input device, a display device, and a wireless unit. As the communication terminal 2, a commercially available smartphone, a tablet terminal, etc. equipped with a digital camera, for example, may be utilized.

The configuration of the transaction processing system 1 is not limited to that shown in FIG. 1. For example, an attendant terminal may be connected to the network 16. The attendant terminal is a device that allows a store employee called an attendant to monitor the state of the checkout apparatus 12 handling the customer's self-service payment. Instead of separating the store server 13 and the virtual POS server 14, a single server equipped with both the function of the store server 13 and the function of the virtual POS server 14 may be connected to the network 16.

### <Description of Configuration of Checkout Apparatus>

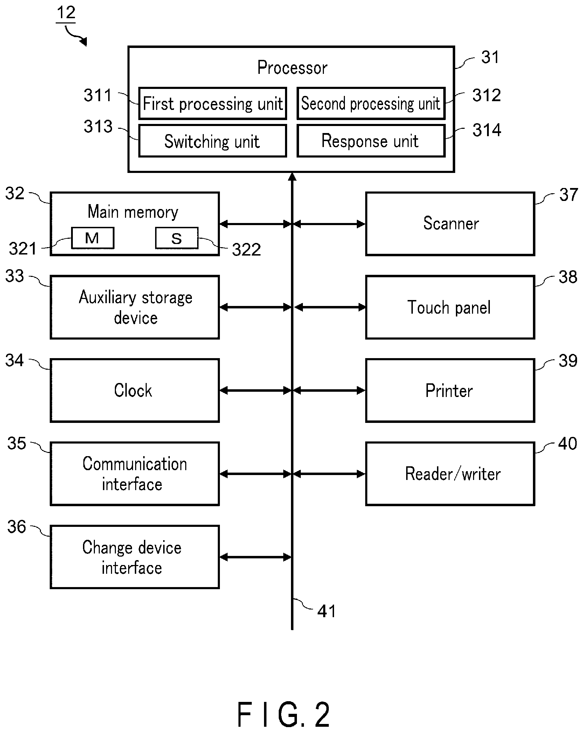

FIG. 2 is a block diagram showing a main circuit configuration of the checkout apparatus 12. The first checkout apparatus 12-1 and the second checkout apparatus 12-2 have an identical configuration. Accordingly, they will be collectively referred to as a "checkout apparatus 12" for the description of its configuration with reference to FIG. 2.

The checkout apparatus 12 includes a processor 31, a main memory 32, an auxiliary storage device 33, a clock 34, a communication interface 35, a change device interface 36, a scanner 37, a touch panel 38, a printer 39, a reader/writer 40, a system transmission path 41, etc. The system transmission path 41 includes an address bus, a data bus, a control signal line, etc. The system transmission path 41 connects the processor 31 with other components either directly or via a signal input/output circuit, and allows a data signal to be exchanged therebetween to be transmitted.

In the checkout apparatus 12, a computer is configured by connecting the processor 31 with the main memory 32, the auxiliary storage device 33, the clock 34, and the communication interface 35 with the system transmission path 41. In the checkout apparatus 12, device interfaces and/or devices such as a change device interface 36, a scanner 37, a touch panel 38, a printer 39, a reader/writer 40, etc. are connected to the computer via the system transmission path 41.

The processor 31 corresponds to a central nerve part of the computer. The processor 31 controls the components to realize a variety of functions as the checkout apparatus 12, in accordance with an operating system or application programs. The processor 31 may be processing circuitry such as a central processing unit (CPU), a graphics processing unit (GPU), an application-specific integrated circuit (ASIC), a programmable logic device (e.g., a simple programmable logic device (SPLD), a complex programmable logic device (CPLD), a field-programmable gate array (FPGA), etc.). The processor 11 is not necessarily configured as a single processing circuit, and a plurality of processing circuits may be combined to configure the processor 11.

The main memory 32 corresponds to a main storage part of the computer. The main memory 32 includes a non-volatile memory region and a volatile memory region. The main memory 32 stores, in the non-volatile memory region, an operating system and/or application programs. There is also a case where the main memory 32 stores data necessary for the processor 31 to execute a process for controlling each component in the non-volatile or volatile memory region. The main memory 32 uses the volatile memory region as a work area in which data is appropriately rewritten by the processor 31. The non-volatile memory region is, for example, a read-only memory (ROM). The volatile memory region is, for example, a random-access memory (RAM).

The auxiliary storage device 33 corresponds to an auxiliary storage part of the computer. The auxiliary storage device 33 may be, for example, an electrically erasable programmable read-only memory (EEPROM), a hard disk drive (HDD), a solid-state drive (SSD), or the like. The auxiliary storage device 33 stores data to be used by the processor 31 in performing a variety of processing, data created by the processing at the processor 31, etc. There is also a case where the auxiliary storage device 33 stores the above-described application programs.

The clock 34 measures a date and time. The processor 31 handles the date and time measured by the clock 34 as a current date and time.

The communication interface 35 performs data communications with the registration apparatus 11, the other checkout apparatus 12, the store server 13, the virtual POS server 14, etc. connected via the network 16.

The change device interface 36 configures an interface with an automatic change device (unillustrated). The change device interface 36 inputs, from the change device, data on an amount of coinage inserted into the automatic change device. The change device interface 36 outputs the change data from the checkout apparatus 12 to the automatic change device. The automatic change device, to which the change data has been input, automatically returns coinage corresponding to the change data as a change.

The scanner 37 is an example of a reading device configured to read a code symbol such as a barcode, a two-dimensional code, and the like. The scanner 37 may be either of a type that reads the code symbol by scanning with laser light, or of a type that reads the code symbol from an image captured with an imaging device.

The touch panel 38 is a device that functions both as an input device and as a display device. The touch panel 38 displays information for an operator of the checkout apparatus 12, and accepts an operation input by the operator.

The printer 39 issues a receipt by printing a variety of character strings, images, or the like on receipt paper. For this type of printer 39, a thermal printer, a dot impact printer, or the like, can be utilized.

The reader/writer 40 is equipped with a function of reading data recorded on a medium such as a card, a smartphone, etc., and a function of writing data on the medium. The card may include a loyalty card called a company loyalty card, a coalition loyalty card, etc., as well as a settlement card such as a credit card, a debit card, an electronic money card, a prepaid card, etc. The reader/writer 40 may be a magnetic-type, a contact-type, or a non-contact-type device, or may include a plurality of types of devices.

In the checkout apparatus 12 with the above-described configuration, the processor 31 is equipped with functions as a first processing unit 311, a second processing unit 312, a switching unit 313, and a response unit 314. All the functions as the first processing unit 311, the second processing unit 312, the switching unit 313, and the response unit 314 are realized by information processing executed by the processor 31 in accordance with the programs.

The first processing unit 311 plays a function of handling, based on data regarding a first product being purchased, which has been input with the registration apparatus 11, payment for the first product being purchased. That is, the first processing unit 311 plays a function corresponding to a semi-self-type transaction processing system.

The second processing unit 312 plays a function of handling, based on data regarding a second product being purchased, which has been input with a terminal or a device other than the registration apparatus 11, payment for the second product being purchased. The "terminal other than the registration apparatus 11" denotes the communication terminal 2. The "device" denotes the scanner 37 or the touch panel 38. That is, the second processing unit 312 plays a function corresponding to an individual-input-type or continuous-input-type transaction processing system. It is to be noted that the data regarding the first product being purchased and the data regarding the second product being purchased merely differ in the source of input, and are data with substantially the same structure.

The switching unit 313 plays a function of switching between, according to an operation input via an operating element, enabling the first processing unit 311 to handle the payment and enabling the second processing unit 312 to handle the payment. A description about the operating element will be given later.

The response unit 314 plays a function of, if the second processing unit 312 is enabled to handle the payment, making a response indicating that transmission of data regarding the first product being purchased is not to be accepted from the registration apparatus 11. The second processing unit 312 being enabled to handle the payment refers to a state in which the checkout apparatus 12 functions as a checkout apparatus in an individual-input-type or continuous-input-type transaction processing system.

To realize the above-described functions, the checkout apparatus 12 uses a part of the volatile memory region in the main memory 32 as a region of a mode memory 321 and a status memory 322.

The mode memory 321 is a region for storing mode data M. The mode data M includes data in a first mode Ma, data in a second mode Mb, and data in a third mode Mc. The first mode Ma is a mode corresponding to a semi-self-type transaction processing system. The second mode Mb is a mode corresponding to an individual-input-type transaction processing system. The third mode Mc is a mode corresponding to a continuous-input-type transaction processing system.

The status memory 322 is a region for storing status data S. The status data S includes data in a first status Sa and data in a second status Sb. The first status Sa denotes a state in which the checkout apparatus is capable of executing a settlement process as a checkout apparatus in a semi-self-type transaction processing system. The second status Sb denotes a state in which the checkout apparatus is incapable of executing a settlement process in a semi-self-type transaction processing system. The "settlement process" refers to a process regarding payment for a product being purchased. There are two states in which the settlement process cannot be executed. One of them is a state in which a settlement process is being executed and another settlement process cannot be executed. The other is a state in which a checkout apparatus is functioning as a checkout apparatus in an individual-input-type or continuous-input-type transaction processing system.

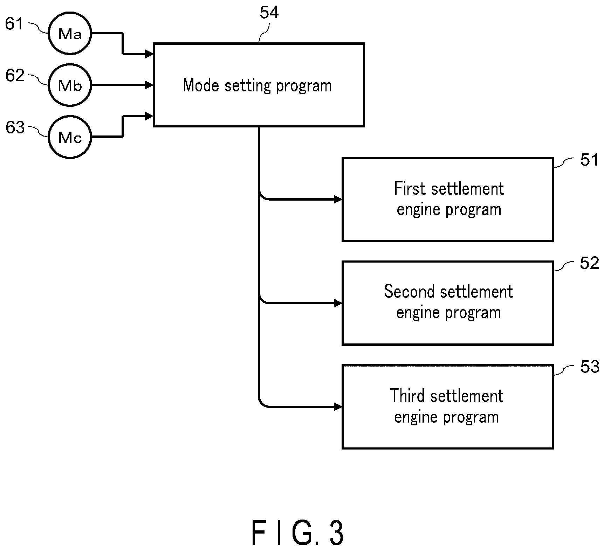

To realize the above-described functions, the checkout apparatus 12 has a program structure shown in the schematic diagram of FIG. 3. That is, the checkout apparatus 12 is equipped with a first settlement engine program 51, a second settlement engine program 52, a third settlement engine program 53, and a mode setting program 54. Each of the programs 51 to 54 is a type of an application program stored in the main memory 32 or the auxiliary storage device 33. A method of installing the programs 51 to 54 in the main memory 32 or the auxiliary storage device 33 is not particularly limited. Through recording of the programs 51 to 54 in a removable recording medium, or through communications via the network 16, the programs 51 to 54 can be distributed and installed in the main memory 32 or the auxiliary storage device 33. The recording medium may be in any form that can store programs and can be read by the apparatus, such as a CD-ROM, a memory card, or the like.

The first settlement engine program 51 is an application program for supporting the checkout apparatus 12 to function as a checkout apparatus in a semi-self-type transaction processing system. The second settlement engine program 52 is an application program for supporting the checkout apparatus 12 to function as a checkout apparatus in an individual-input-type transaction processing system. The third settlement engine program 53 is an application program for supporting the checkout apparatus 12 to function as a checkout apparatus in a continuous-input-type transaction processing system.

The mode setting program 54 is an application program for controlling a computer to set mode data M in the mode memory 321 in response to an input via a first mode setting key 61, a second mode setting key 62, or a third mode setting key 63.

Specifically, if an input is made via the first mode setting key 61 under predetermined conditions, the mode setting program 54 controls the computer to set data in the first mode Ma in the mode memory 321. The first mode Ma is a mode corresponding to a semi-self-type transaction processing system. The function corresponding to the semi-self-type transaction processing system is a function served by the first processing unit 311. That is, the first mode setting key 61 is an example of an operating element for enabling the first processing unit 311 to handle the payment.

If an input is made via the second mode setting key 62 under predetermined conditions, the mode setting program 54 controls the computer to set data in the second mode Mb in the mode memory 321. The second mode Mb is a mode corresponding to an individual-input-type transaction processing system. The function corresponding to the individual-input-type transaction processing system is a function served by the second processing unit 312. That is, the second mode setting key 62 is an example of an operating element for enabling the second processing unit 312 to handle the payment.

If an input is made via the third mode setting key 63 under predetermined conditions, the mode setting program 54 controls the computer to set data in the third mode Mc in the mode memory 321. The third mode Mc is a mode corresponding to a continuous-input-type transaction processing system. The function corresponding to the continuous-input-type transaction processing system is also a function served by the second processing unit 312. That is, the third mode setting key 63 is also an example of an operating element for enabling the second processing unit 312 to handle the payment.

The first mode setting key 61, the second mode setting key 62, and the third mode setting key 63 are, for example, soft keys displayed on a part of a screen of the touch panel 38. If the checkout apparatus 12 further includes a keyboard as an input device, the first mode setting key 61, the second mode setting key 62, and the third mode setting key 63 may be hard keys arranged on the keyboard.

In this manner, the checkout apparatus 12 may operate as a checkout apparatus in a semi-self-type transaction processing system, but also as a checkout apparatus in an individual-input-type or continuous-input-type transaction processing system. Prior to describing an operation of the checkout apparatus 12, semi-self-type, individual-input-type, and continuous-input-type transaction processing systems will be briefly described.

### <Brief Description of Semi-self Type>

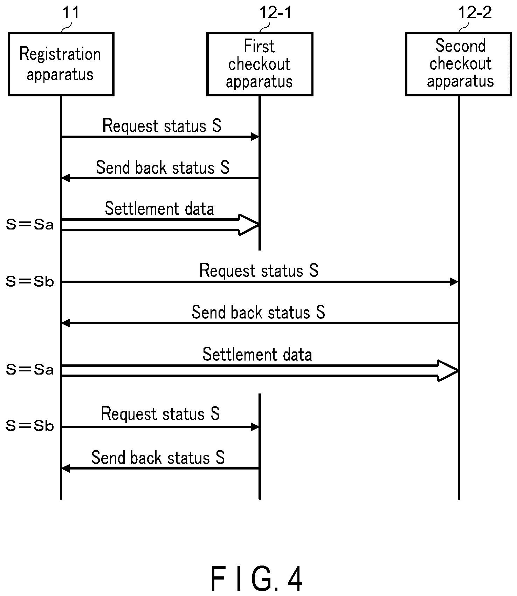

FIG. 4 is a sequence diagram showing an example of communications performed between a registration apparatus 11, a first checkout apparatus 12-1, and a second checkout apparatus 12-2 configuring a semi-self-type transaction processing system.

In a semi-self type, data regarding products being purchased by a customer is input on the registration apparatus 11. After inputting of data regarding all the products being purchased is completed, the registration apparatus 11 transmits, to the first checkout apparatus 12-1, for example, a request command for status data S. Upon receiving the request command, the first checkout apparatus 12-1 transmits, to the registration apparatus 11, a response command including the status data S stored in the status memory 322.

Upon receiving the response command, the registration apparatus 11 confirms the status data S included in the command. If the status data S is in the status Sa, namely, if the first checkout apparatus 12-1 is capable of executing a settlement process, the registration apparatus 11 transmits settlement data to the first checkout apparatus 12-1. The settlement data is data necessary for the checkout apparatus 12 to handle payment for the products being purchased. The settlement data includes at least a product code and the number of items of each product being purchased. If an input is made to discount or reduce a subtotal of the transaction, the settlement data also includes a discount amount or a reduction rate. The settlement data is an example of the data regarding a first product being purchased.

On the other hand, if the status data S is in the status Sb, namely, if the first checkout apparatus 12-1 is not capable of executing a settlement process, the registration apparatus 11 transmits a request command for the status data S to the second checkout apparatus 12-2. Upon receiving the request command, the second checkout apparatus 12-2 transmits a response command including the status data S stored in the status memory 322 to the registration apparatus 11.

Upon receiving the response command, the registration apparatus 11 confirms the status data S included in the command. If the status data S is in the status Sa, namely, if the second checkout apparatus 12-2 is capable of executing a settlement process, the registration apparatus 11 transmits settlement data to the second checkout apparatus 12-2.

On the other hand, if the status data S is in the status Sb, namely, if the second checkout apparatus 12-2 is also not capable of executing a settlement process, the registration apparatus 11 transmits again a request command for the status data S to the first checkout apparatus 12-1. In this manner, if one of the first checkout apparatus 12-1 and the second checkout apparatus 12-2 becomes capable of executing a settlement process, the registration apparatus 11 transmits settlement data to the checkout apparatus 12 (the first checkout apparatus 12-1 or the second checkout apparatus 12-2) capable of executing the settlement process. Upon receiving the settlement data, the checkout apparatus 12 (the first checkout apparatus 12-1 or the second checkout apparatus 12-2) executes a settlement process in response to an operation input by a customer.

In the case where the status data S included in the response command is in the status Sa, the registration apparatus 11 displays information specifying the checkout apparatus 12 that has transmitted the response command on the display device. A store employee, who is an operator of the registration apparatus 11, can instruct the customer to pay for the products being purchased with the checkout apparatus 12 specified by the displayed information.

The checkout apparatus 12 to which the registration apparatus 11 transmits a request command for the status data S first is not limited to the first checkout apparatus 12-1. A request command for the status data S may be transmitted first to the second checkout apparatus 12-2. Alternatively, the registration apparatus 11 may transmit a request command for the status data S to one of the checkout apparatuses 12 selected by an operation input by a store employee. Usually, a store employee, who is an operator of the registration apparatus 11, can visually confirm whether or not a customer is performing a payment operation with the first checkout apparatus 12-1 or the second checkout apparatus 12-2. Accordingly, the store employee selects a vacant checkout apparatus 12. Thereby, since the status data S included in the response command from the checkout apparatus 12 is highly likely to be in the status "Sa", the store employee can quickly instruct the customer to use the checkout apparatus 12.

### <Brief Description of Individual-input Type>

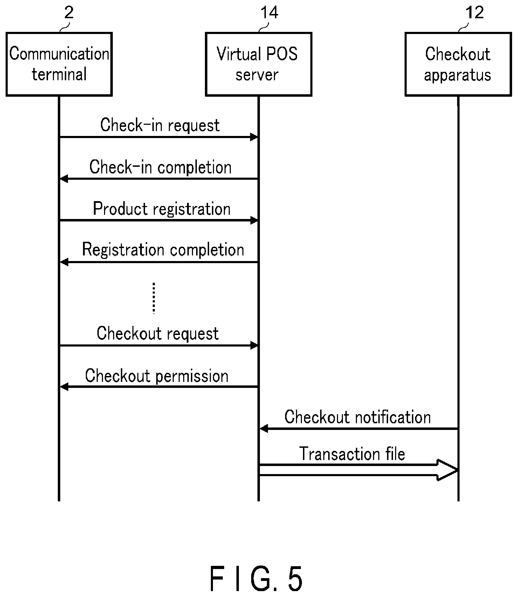

FIG. 5 is a sequence diagram showing an example of communications performed between a communication terminal 2, a virtual POS server 14, and a checkout apparatus 12 configuring an individual-input-type transaction processing system. The checkout apparatus 12 may be either the first checkout apparatus 12-1 or the second checkout apparatus 12-2.

First, a customer who wants to utilize a smartphone, for example, as the communication terminal 2 installs a shopping support application program ("shopping app") for a store in which the transaction processing system 1 is constructed. The customer performs user registration. Thereby, the customer can utilize the smartphone as the communication terminal 2.

The customer who carries the communication terminal 2 activates the shopping app before entering the store. Thereby, the camera of the communication terminal 2 is activated, allowing a store entry code to be read. The store entry code is a code obtained by converting setting information regarding the store in a predetermined two-dimensional code system, and is prepared at, for example, an entrance of the store. The setting information contains, for example, parameters necessary for the communication terminal 2 to communicate with the access point 15 utilizing a wireless LAN, information regarding operation restrictions on the communication terminal 2, or the like. The customer allows the camera of the communication terminal 2 to read the store entry code.

If the store entry code is read on the communication terminal 2, the communication terminal 2 connects to the access point 15 using the wireless LAN. If the communication terminal 2 is connected to the access point 15, the communication terminal 2 transmits a check-in request command to the virtual POS server 14. The check-in request command contains terminal identification information of the communication terminal 2. The terminal identification information is unique information different from that of the communication terminal 2 utilized by another customer. A program ID of the shopping app installed on the communication terminal 2, for example, is used as the terminal identification information.

Upon receiving the check-in request command, the virtual POS server 14 creates a transaction file. The transaction file is a data file for storing product sales data of a product identified by the product code input via the communication terminal 2. A transaction file is created for each communication terminal 2. The terminal identification information of the communication terminal 2 is associated with each transaction file.

Upon creating the transaction file, the virtual POS server 14 transmits a check-in completion command to the communication terminal 2 that has transmitted the check-in request command. Upon receiving the check-in completion command, the communication terminal 2 makes the screen of the display device a registration screen. The registration screen is a screen for displaying the name, price, etc. of the product identified by the product code input via the communication terminal 2. On the registration screen, a product registration button is displayed.

The customer places the communication terminal 2 on a shopping cart or carries it and strolls around the selling space where the products are displayed. Upon finding a product to be purchased, the customer makes an input via the product registration button. After the input is made via the product registration button, data regarding the product being purchased is input on the communication terminal 2. The communication terminal 2 is brought to, for example, a barcode reading standby state. The customer allows the camera to read the barcode given to the product being purchased. If the barcode of the product is read with the camera, the communication terminal 2 inputs the product code denoted by the barcode as data of the product being purchased.

On the registration screen, a button for items without barcodes is also displayed. If a barcode is not given to the product being purchased, the customer makes an input via the button for items without barcodes. If the input is made via the button for items without barcodes, a list of products without barcodes is displayed on the display device. The customer selects the product being purchased from the list. If the product being purchased is selected, the communication terminal 2 inputs a product code of the selected product as the data regarding the product being purchased.

Upon receiving the input of the data regarding the product being purchased, the communication terminal 2 transmits a product registration command to the virtual POS server 14. The product registration command includes terminal identification information of the communication terminal 2 and data of the product being purchased.

Upon receiving the product registration command, the virtual POS server 14 adds product sales data to a transaction file with which terminal identification information of the communication terminal 2 which has transmitted the product registration command is associated. The product sales data is data containing a product code, a product name, a price, the number of items being sold, an amount of sales, etc. of a product being purchased. The amount of sales is an amount obtained by multiplying the price by the number of items being sold.

Upon adding the product sales data to the transaction file, the virtual POS server 14 transmits a registration completion command to the communication terminal 2 which has transmitted the product registration command. Upon receiving the registration completion command, the communication terminal 2 updates the registration screen. That is, the communication terminal 2 updates the registration screen in such a manner that the product name, the price, etc. of the product sales data added to the transaction file are displayed. On the updated registration screen, a checkout button is displayed together with the product registration button, etc. Upon updating the registration screen, the communication terminal 2 waits until data of the product being purchased is input or an input is made via the checkout button.

Upon finding a next product to be purchased, the customer makes an input via the product registration button. After the input is made via the product registration button, data regarding the product being purchased is input on the communication terminal 2. The communication terminal 2 transmits a product registration command to the virtual POS server 14. The subsequent functions of the communication terminal 2 and the virtual POS server 14 are similar to those described above.

The customer who has completed shopping at the selling space makes an input via the checkout button. Upon receiving the input via the checkout button, the communication terminal 2 transmits a checkout request command to the virtual POS server 14. The checkout request command contains terminal identification information of the communication terminal 2.

Upon receiving the checkout request command, the virtual POS server 14 creates a unique checkout barcode. The virtual POS server 14 creates, for example, a checkout barcode obtained by converting the terminal identification information of the communication terminal 2 which has transmitted the checkout request command in a predetermined barcode system. Upon creating the checkout barcode, the virtual POS server 14 transmits a checkout permission command to the communication terminal 2 which has transmitted the checkout request command. The checkout permission command contains data of the checkout barcode. Upon receiving the checkout permission command, the communication terminal 2 causes the display device to display an image of the checkout barcode.

Upon confirming that the checkout barcode is being displayed on the display device of the communication terminal 2 after completing shopping at the selling space and making an input via the checkout button, the customer moves to a location where the checkout apparatus 12 is installed. The customer holds the checkout barcode over the scanner 37 of the checkout apparatus 12 on which a checkout waiting screen is being displayed. By being held over the scanner 37, the checkout barcode is read by the scanner 37. With the checkout barcode being read by the scanner 37, a checkout notification command is transmitted from the checkout apparatus 12 to the virtual POS server 14. The checkout notification command contains terminal identification information obtained by decoding the checkout barcode. Upon receiving the checkout notification command, the virtual POS server 14 transmits a transaction file with which the terminal identification information is associated to the checkout apparatus 12. The data of the transaction file is an example of data regarding a second product being purchased. The checkout apparatus 12 executes a settlement process based on data of the transaction file.

### <Brief Description of Continuous-input Type>

A continuous-input type is realized by a single checkout apparatus 12. The checkout apparatus 12 may be either the first checkout apparatus 12-1 or the second checkout apparatus 12-2.

The customer who has completed shopping at the selling space goes to a location where the checkout apparatus 12 is installed. The customer operates the scanner 37 or the touch panel 38, which is an input device of the checkout apparatus 12, and inputs data regarding each product being purchased. If, for example, a barcode is given to a product being purchased, the barcode is scanned with the scanner 37. If a barcode is not given to the product being purchased, the product being purchased is selected from a list of products without barcodes displayed on the touch panel 38. After completing inputting of data regarding all the products being purchased, the customer makes a payment statement. With the payment statement, which allows the payment to be made, the customer operates a change device, a reader/writer 40, or the like to make the payment. The data regarding the products being purchased for which data inputting has been completed is an example of data regarding a second product being purchased. The checkout apparatus 12 executes a settlement process in response to a payment operation by the customer.

### <Description of Operation of Checkout Apparatus>

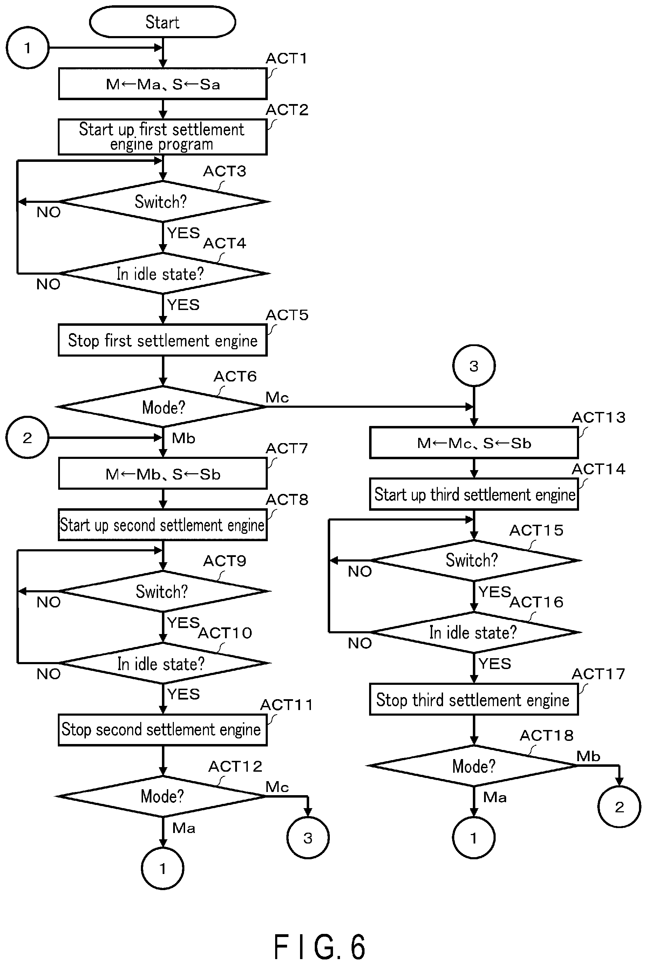

Next, a main operation of the checkout apparatus 12 will be described with reference to the flowcharts of FIGS. 6 to 9. An operation to be described below is an example. The details of the procedure or processing that leads to such an operation can be suitably varied, as long as similar effects can be produced.

### <<Description of Operation of Checkout Apparatus based on Mode Setting Program>>

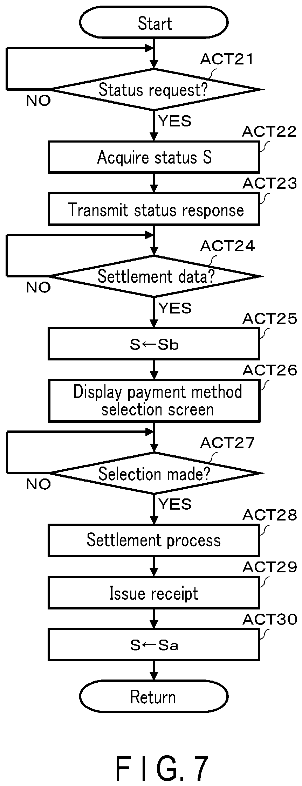

FIG. 6 is a flowchart showing a procedure for information processing executed by the processor 31 of the checkout apparatus 12 in accordance with the mode setting program 54. First, the processor 31 brings, at ACT1, mode data M in the mode memory 321 to the first mode Ma corresponding to the semi-self-type transaction processing system. Also, the processor 31 brings the status data S in the status memory 322 to the status Sa. That is, the processor 31 makes the checkout apparatus 12 capable of executing a settlement process as a checkout apparatus in a semi-self-type transaction processing system. Thereafter, the processor 31 starts up, at ACT2, the first settlement engine program 51. An operation of the checkout apparatus 12 after the starting up of the first settlement engine program 51 will be described later with reference to FIG. 7.

After starting up the first settlement engine program 51, the processor 31 waits until an instruction to switch the operation mode is given at ACT3. At this point in time, the first mode Ma corresponding to the semi-self-type transaction processing system is set. Accordingly, the processor 31 waits until an instruction to switch to the second mode Mb or the third mode Mc corresponding to the individual-input-type or continuous-input-type transaction processing system is given. The instruction to switch to the individual-input type is given by an operation input via the second mode setting key 62. The instruction to switch to the continuous-input type is given by an operation input via the third mode setting key 63.

Upon receiving the instruction to switch the operation mode, the processor 31 confirms, at ACT4, whether or not the first settlement engine program 51 is in an idle state. If the first settlement engine program 51 is not in an idle state, namely, if a settlement process is being executed, the operation mode cannot be switched. The processor 31 determines NO at ACT4, and returns to ACT3.

If the first settlement engine program 51 is in an idle state, namely, if a settlement process is not being executed, the processor 31 determines YES at ACT4, and advances to ACT5. The processor 31 stops the first settlement engine program 51 at ACT5. The processor 31 determines an operation mode in which switching is instructed at ACT6.

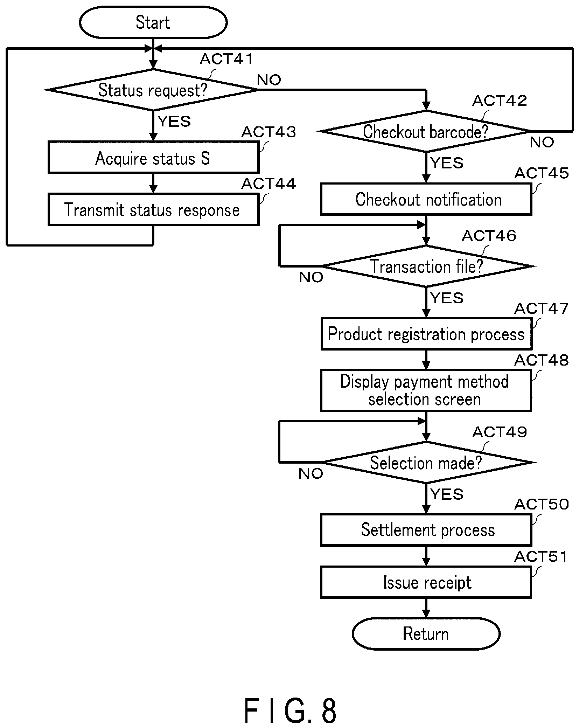

If an instruction to switch to a mode corresponding to the individual-input-type transaction processing system is given by an operation input via the second mode setting key 62 ("Mb" at ACT6), the processor 31 advances to ACT7. The processor 31 sets, at ACT7, the mode data M in the mode memory 321 as data in the second mode Mb corresponding to the individual-input-type transaction processing system. Also, the processor 31 brings the status data S in the status memory 322 to the status Sb. That is, the processor 31 makes the checkout apparatus incapable of executing a settlement process as a checkout apparatus in a semi-self-type transaction processing system. The processor 31 starts up, at ACT8, a second settlement engine program 52. An operation of the checkout apparatus 12 after the starting up of the second settlement engine program 52 will be described later with reference to FIG. 8.

After starting up the second settlement engine program 52, the processor 31 waits until an instruction to switch the operation mode is given at ACT9. At this point in time, the second mode Mb corresponding to the individual-input-type transaction processing system is set. Accordingly, the processor 31 waits until an instruction to switch to the first mode Ma or the third mode Mc corresponding to the semi-self-type or continuous-input-type transaction processing system is given. The instruction to switch to the semi-self type is given by an operation input via the first mode setting key 61. The instruction to switch to the continuous-input type is given by an operation input via the third mode setting key 63.

Upon receiving the instruction to switch the operation mode, the processor 31 confirms, at ACT10, whether or not the second settlement engine program 52 is in an idle state. If the second settlement engine program 52 is not in an idle state, namely, if a settlement process is being executed, the operation mode cannot be switched. The processor 31 determines NO at ACT10, and returns to ACT9.

If the second settlement engine program 52 is in an idle state, namely, if a settlement process is not being executed, the processor 31 determines YES at ACT10, and advances to ACT11. The processor 31 stops the second settlement engine program 52 at ACT11. The processor 31 determines an operation mode in which switching is instructed at ACT12.

If an instruction to switch to a mode corresponding to a semi-self-type transaction processing system is given by an operation input via the first mode setting key 61 ("Ma" at ACT12), the processor 31 advances to ACT1. That is, the processor 31 brings the mode data M in the mode memory 321 to the first mode Ma, and brings the status data S in the status memory 322 to the status Sa. Also, the processor 31 starts up the first settlement engine program 51. The processor 31 executes processing of ACT3 and thereafter in a manner similar to the above-described one.

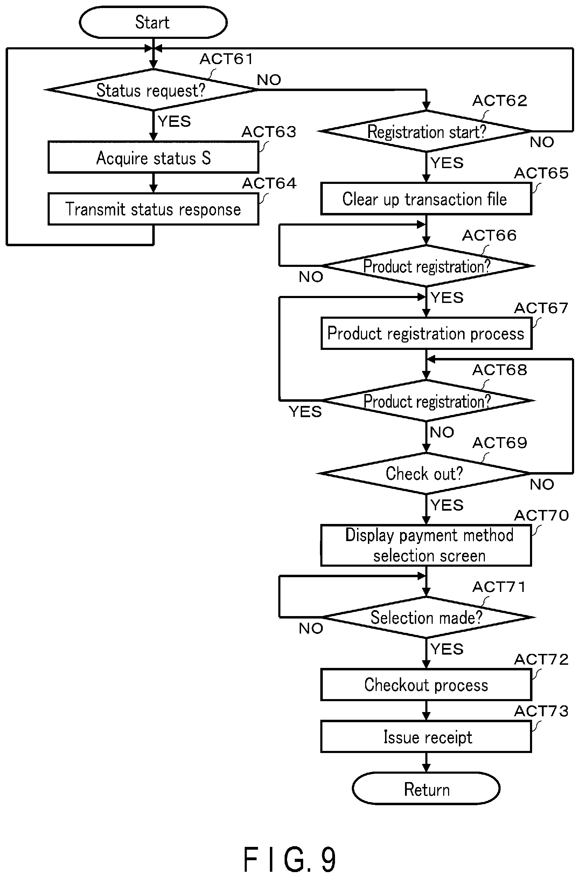

If an instruction to switch to a third mode Mc corresponding to a continuous-input-type transaction processing system is given at ACT6 or ACT12 by an operation input via the third mode setting key 63 ("Mc" at ACT6 or ACT12), the processor 31 advances to ACT13. The processor 31 sets, at ACT13, the mode data M in the mode memory 321 as data in the third mode Mc corresponding to a continuous-input-type transaction processing system. Also, the processor 31 brings the status data S in the status memory 322 to the status Sb. That is, the processor 31 makes the checkout apparatus 12 incapable of executing a settlement process as a checkout apparatus in a semi-self-type transaction processing system. Thereafter, the processor 31 starts up, at ACT14, the third settlement engine program 53. An operation of the checkout apparatus 12 after the starting up of the third settlement engine program 53 will be described later with reference to FIG. 9.

After starting up the third settlement engine program 53, the processor 31 confirms, at ACT15, whether or not an instruction to switch the operation mode has been given. At this point in time, the third mode Mc corresponding to the continuous-input-type transaction processing system is set. Accordingly, the processor 31 waits until an instruction to switch to the first mode Ma or the second mode Mb corresponding to the semi-self-type or individual-input-type transaction processing system is given. The instruction to switch to the semi-self type is given by an operation input via the first mode setting key 61. The instruction to switch to the individual-input type is given by an operation input via the second mode setting key 62.

Upon receiving the instruction to switch the operation mode, the processor 31 confirms, at ACT16, whether or not the third settlement engine program 53 is in an idle state. If the third settlement engine program 53 is not in an idle state, namely, if a settlement process is being executed, the operation mode cannot be switched. The processor 31 determines NO at ACT16, and returns to ACT15.

If the third settlement engine program 53 is in an idle state, namely, if the checkout apparatus is not executing a settlement process as a checkout apparatus in a continuous-input-type transaction processing system, the processor 31 determines YES at ACT16, and advances to ACT17. The processor 31 stops the third settlement engine program 53 at ACT17. The processor 31 determines an operation mode in which switching is instructed at ACT18.

If an instruction to switch to a first mode Ma corresponding to a semi-self-type transaction processing system is given by an operation input via the first mode setting key 61 ("Ma" at ACT18), the processor 31 advances to ACT1. That is, the processor 31 brings the mode data M in the mode memory 321 to the first mode Ma, and brings the status data S in the status memory 322 to the status Sa. Also, the processor 31 starts up the first settlement engine program 51. The processor 31 executes processing of ACT3 and thereafter in a manner similar to the above-described one.

On the other hand, if an instruction to switch to a second mode Mb corresponding to an individual-input-type transaction processing system is given by an operation input via the second mode setting key 62 ("Mb" at ACT18), the processor 31 advances to ACT7. That is, the processor 31 brings the mode data M in the mode memory 321 to the second mode Mb, and brings the status data S in the status memory 322 to the status Sb. Also, the processor 31 starts up the second settlement engine program 52. The processor 31 executes processing of ACT9 and thereafter in a manner similar to the above-described one.

In this manner, the processor 31 executes information processing of the procedure shown in the flowchart of FIG. 6, in accordance with the mode setting program 54 in cooperation with the first mode setting key 61, the second mode setting key 62, and the third mode setting key 63, which are operating elements. The information processing allows the processor 31 to set the operation mode of the checkout apparatus 12 to one of a first mode Ma corresponding to a semi-self-type transaction processing system, a second mode Mb corresponding to an individual-input-type transaction processing system, and a third mode Mc corresponding to a continuous-input-type transaction processing system.

Specifically, if an operation input is made by an operator via the first mode setting key 61 while the second settlement engine program 52 or the third settlement engine program 53 is in an idle state, the processor 31 brings the operation mode of the checkout apparatus 12 to the first mode Ma corresponding to the semi-self-type transaction processing system. If an operation input is made by an operator via the second mode setting key 62 while the first settlement engine program 51 or the third settlement engine program 53 is in an idle state, the processor 31 brings the operation mode of the checkout apparatus 12 to the second mode Mb corresponding to the individual-input-type transaction processing system. If an operation input is made by an operator via the third mode setting key 63 while the first settlement engine program 51 or the second settlement engine program 52 is in an idle state, the processor 31 brings the operation mode of the checkout apparatus 12 to the third mode Mc corresponding to the continuous-input-type transaction processing system.

Thus, through the execution of the processing from ACT1 to ACT18 of FIG. 6, the processor 31 realizes the function as the switching unit 313.

### <<Description of Operation of Checkout Apparatus based on First Settlement Engine Program>>

FIG. 7 is a flowchart showing a procedure for information processing executed by the processor 31 of the checkout apparatus 12 in accordance with the first settlement engine program 51. If the first settlement engine program 51 is in an idle state after start-up, the processor 31 waits for a request command for the status data S at ACT21.

As described with reference to FIG. 4, a request command for the status data S is transmitted from the registration apparatus 11. Upon receiving the request command for the status data S, the processor 31 determines YES at ACT21, and advances to ACT22. The processor 31 acquires the status data S from the status memory 322 at ACT22. The status data S is in the status Sa at ACT1 of FIG. 6. The processor 31 transmits a response command including the status data S to the registration apparatus 11 which has transmitted the request command.

The processor 31 waits for settlement data at ACT24. As described with reference to FIG. 4, after the response command including the status Sa is transmitted to the registration apparatus 11, settlement data is sent from the registration apparatus 11. Upon receiving the settlement data, the processor 31 determines YES at ACT24, and advances to ACT25. The processor 31 temporarily brings the status data S to the status Sb at ACT25. Thereafter, the processor 31 makes the screen of the touch panel 38 a payment method selection screen at ACT26.

The payment method selection screen is a screen on which payment method selection buttons such as a cash button, a credit-card button, an electronic-money button, etc. are arranged as operating elements. The cash button is operated via a touch by a customer who selects cash as the payment method. The credit-card button is operated via a touch by a customer who selects a credit card as the payment method. The electronic-money button is operated via a touch by a customer who selects electronic money as the payment method. The payment method is not limited to the three types: cash, credit card, and electronic money. Any two types or another payment method may be selected. There may be only one payment method. In this case, an operating element for instructing a start of a settlement, such as a settlement start button, can be displayed on the payment method selection screen, in place of the payment method selection buttons.

The processor 31 waits until a payment method is selected at ACT27. If any of the payment methods is selected by an operation input via the payment method selection screen, the processor 31 determines YES at ACT27, and advances to ACT28. The processor 31 executes a settlement process at ACT28. If, for example, "cash" is selected as the payment method, the processor 31 executes a process of subtracting a total amount of money from an amount of money inserted into an automatic change device, calculating and returning the change from the automatic change device. If, for example, "credit card" is selected as the payment method, the processor 31 verifies a credit card read by the reader/writer 40, and confirms the total amount as a credit-card settlement amount on the condition that it has been verified. If, for example, "electronic money" is selected as the payment method, the processor 31 withdraws the total amount from a remaining value of an electronic-money medium read by the reader/writer 40.

After completing the settlement process, the processor 31 advances to ACT29. The processor 31 controls issuance of a receipt by the printer 39 at ACT29. On the receipt, transaction detail data such as a product name, a price, the number of items being sold, an amount of sales, a total number of items, a total amount, a payment amount, etc. of a product being bought are printed.

Thereafter, the processor 31 brings the status data S to the status Sa at ACT30. With the foregoing, the processor 31 ends the information processing according to the first settlement engine program 51. The first settlement engine program 51 returns to an idle state. Accordingly, the processor 31 waits for a request command for the status data S at ACT21 again.

There may be a case where a status request command is transmitted from the registration apparatus 11 during a period from when the status data S is brought to the status Sb at ACT25 to when it is returned to the status Sa at ACT30. In this case, too, the processor 31 acquires the status data S from the status memory 322, and transmits a response command including the status data S to the registration apparatus 11. Since the status data S is in the status Sb at this time, settlement data is not transmitted from the registration apparatus 11, as described with reference to FIG. 4.

Thus, through the execution of the processing at ACT28 of FIG. 7, the processor 31 realizes the function as the first processing unit 311.

### <<Description of Operation of Checkout Apparatus based on Second Settlement Engine Program>>

FIG. 8 is a flowchart showing a procedure for information processing executed by the processor 31 of the checkout apparatus 12 in accordance with the second settlement engine program 52. If the second settlement engine program 52 is in an idle state after start-up, the processor 31 confirms, at ACT41, whether or not a request command for the status data S has been received. If the request command has not been received, the processor 31 determines NO at ACT41, and advances to ACT42. The processor 31 confirms, at ACT42, whether or not a checkout barcode has been scanned by the scanner 37. If the checkout barcode has not been scanned, the processor 31 determines NO at ACT42, and returns to ACT41. In this manner, if the second settlement engine program 52 is in an idle state, the processor 31 waits until a request command for the status data S is received or a checkout barcode is scanned.

As described with reference to FIG. 4, a request command for the status data S is transmitted from the registration apparatus 11. Even in the case where the second settlement engine program 52 has been started up and the checkout apparatus 12 is operating as a checkout apparatus in an individual-input-type transaction processing system, there may be a case where a request command for status data S is sent from the registration apparatus 11. In FIG. 4, for example, the first checkout apparatus 12-1 is a checkout apparatus configuring a semi-self-type transaction processing system, and the second checkout apparatus 12-2 is a checkout apparatus configuring an individual-input-type transaction processing system. In this case, if a request command is transmitted from the registration apparatus 11 at a timing when the status data S of the first checkout apparatus 12-1 is in the status Sb, the registration apparatus 11 transmits a request command for the status data S to the second checkout apparatus 12-2.

Upon receiving the request command for the status data S at the waiting state at ACT41 and ACT42, the processor 31 determines YES at ACT41, and advances to ACT43. The processor 31 acquires the status data S from the status memory 322 at ACT43. The status data S is in the status Sb at ACT7 of FIG. 6. The processor 31 transmits, at ACT43, a response command including the status data S to the registration apparatus 11 which has transmitted the request command. Upon receiving the response command including the status data of the status Sb, the registration apparatus 11 does not transmit settlement data to the checkout apparatus 12 which has transmitted the response command.

Thus, through the execution of the processing at ACT43 and ACT44 in FIG. 8, the processor 31 realizes the function as the response unit 314.

If the checkout barcode is scanned at the waiting state at ACT41 or ACT42, the processor 31 determines YES at ACT42, and advances to ACT45. The processor 31 transmits, at ACT45, a checkout notification command to the virtual POS server 14. As described with reference to FIG. 5, the checkout notification command contains terminal identification information obtained by decoding the checkout barcode. Upon receiving the checkout notification command, the virtual POS server 14 transmits a transaction file with which the terminal identification information is associated to the checkout apparatus 12.

The processor 31 waits for the transaction file at ACT46. Upon receiving the transaction file from the virtual POS server 14, the processor 31 determines YES at ACT46, and advances to ACT47. The processor 31 executes, at ACT47, a product registration process based on data on the transaction file. That is, the processor 31 registers, based on the product sales data stored in the transaction file, sales data of the products being purchased in a sales summation memory. Through the registration process, a total amount of the transaction is calculated. The sales summation memory is formed in a volatile memory region of the main memory 32.

Upon completing the product registration process, the processor 31 executes, at ACT48 to ACT51, a process similar to ACT26 to ACT29 in FIG. 7. That is, the processor 31 makes the screen of the touch panel 38 a payment method selection screen at ACT48. Thereafter, the processor 31 waits until a payment method is selected at ACT49. If any of the payment methods is selected, the processor 31 executes a settlement process at ACT50. Upon completing the payment process, the processor 31 controls issuance of a receipt at ACT51. With the foregoing, the processor 31 ends the information processing according to the second settlement engine program 52. The second settlement engine program 52 returns to an idle state. Accordingly, the processor 31 is brought to the waiting state at ACT41 and ACT42 again.

Thus, through the execution of the processing at ACT50 in FIG. 8, the processor 31 realizes the function as the second processing unit 312.

### <<Description of Operation of Checkout Apparatus based on Third Settlement Engine Program>>

FIG. 9 is a flowchart showing a procedure for information processing executed by the processor 31 of the checkout apparatus 12 in accordance with the third settlement engine program 53. If the third settlement engine program 53 is in an idle state after start-up, the processor 31 confirms, at ACT61, whether or not a request command for the status data S has been received. If the request command has not been received, the processor 31 determines NO at ACT61, and advances to ACT62. The processor 31 confirms, at ACT62, whether or not a statement operation to start registration has been performed. If the third settlement engine program 53 is in an idle state, a registration start button is displayed on a screen of the touch panel 38. The registration start button is a button operated first by a customer to input, by an operation by himself/herself, data regarding the product being purchased and pay for the product being purchased by a checkout apparatus 12. If the registration start button is operated, the processor 31 determines that a statement operation to start registration has been performed.

If a statement operation to start registration has not been performed, the processor 31 determines NO at ACT62, and returns to ACT61. In this manner, if the third settlement engine program 52 is in an idle state, the processor 31 receives a request command for the status data S, or waits until a statement operation to start registration is performed.

As described with reference to FIG. 4, a request command for the status data S is transmitted from the registration apparatus 11. Even in the case where the third settlement engine program 53 has been started up and the checkout apparatus 12 is operating as a checkout apparatus in a continuous-input-type transaction processing system, there may be a case where a request command for status data S is sent from the registration apparatus 11, similarly to the case where the checkout apparatus 12 is operating as a checkout apparatus in an individual-input-type transaction processing system.

Upon receiving the request command for the status data S at the waiting state at ACT61 and ACT62, the processor 31 determines YES at ACT61, and advances to ACT63. The processor 31 acquires the status data S from the status memory 322 at ACT63. The status data S is in the status Sb at ACT13 of FIG. 6. The processor 31 transmits, at ACT63, a response command including the status data S to the registration apparatus 11 which has transmitted the request command. Upon receiving the response command including the status data of the status Sb, the registration apparatus 11 does not transmit settlement data to the checkout apparatus 12 which has transmitted the response command.

Thus, through the execution of the processing at ACT63 and ACT64 in FIG. 9, the processor 31 realizes the function as the response unit 314.

If the registration start button is operated at the waiting state at ACT61 and ACT62, the processor 31 determines YES at ACT62, and advances to ACT65. The processor 31 clears up the transaction file at ACT65. The transaction file is formed in a volatile memory region in the main memory 32.

The processor 31 waits for product registration at ACT66. Upon operating the registration start button, the customer scans, if a barcode is given to the product being purchased, the barcode with the scanner 37. If a barcode is not given to the product being purchased, the product being purchased is selected from a list of products without barcodes displayed on the touch panel 38. With such an operation, if data regarding the product being purchased is input, the processor 31 determines that product registration has been performed. The processor 31 executes, at ACT67, a product registration process. That is, the processor 31 registers product sales data including a product code, a product name, a price, the number of items being sold, an amount of sales, etc. of a product being purchased in the transaction file.

Thereafter, the processor 31 confirms, at ACT68, whether or not the next product registration has been performed. If the next product registration has not been performed, the processor 31 determines NO at ACT68, and advances to ACT69. The processor 31 confirms, at ACT69, whether or not a checkout operation has been performed. If a checkout operation has not been performed, the processor 31 determines NO at ACT69, and returns to ACT68. In this manner, the processor 31 waits until a product registration or a checkout operation is performed.

If product registration is performed at the waiting state at ACT68 and ACT69, the processor 31 determines YES at ACT68, and returns to ACT67. That is, the processor 31 executes a product registration process. The processor 31 waits until a product registration or a checkout operation is performed again.

A checkout button is displayed on the touch panel 38. Upon completing input of data regarding all the products being purchased, the customer operates a checkout button to shift to payment. If the checkout button is operated, the processor 31 determines that a checkout operation has been performed.

If a checkout operation is performed at the waiting state at ACT68 and ACT69, the processor 31 executes, at ACT70 to ACT73, a process similar to ACT48 to ACT51 in FIG. 8. That is, the processor 31 makes the screen of the touch panel 38 a payment method selection screen at ACT70. Thereafter, the processor 31 waits until a payment method is selected at ACT71. If any of the payment methods is selected, the processor 31 executes a settlement process at ACT72. Upon completing the payment process, the processor 31 controls issuance of a receipt at ACT73. With the foregoing, the processor 31 ends the information processing according to the third settlement engine program 53. The third settlement engine program 53 returns to an idle state. Accordingly, the processor 31 is brought to the waiting state at ACT61 and ACT62 again.

Thus, through the execution of the processing at ACT72 in FIG. 9, the processor 31 realizes the function as the second processing unit 312, similarly to the case of executing ACT50 in FIG. 8.

### <Advantageous Effects of Transaction Processing System>

In the transaction processing system 1 exemplified in FIG. 1, the operation modes of all of the first checkout apparatuses 12-1 and the second checkout apparatuses 12-2 are set to the first mode Ma. Thereby, the first checkout apparatus 12-1 and the second checkout apparatus 12-2, together with the corresponding registration apparatus 11, function as checkout apparatuses configuring a semi-self-type transaction processing system. Therefore, after data on the product being purchased is input by a store employee with the registration apparatus 11, the customer can pay for the product being purchased by himself/herself with a checkout apparatus 12 (the first checkout apparatus 12-1 or the second checkout apparatus 12-2) that the store employee has instructed to use.

On the other hand, the second mode setting key 62 of the second checkout apparatus 12-2, for example, is operated to change the operation mode to the second mode Mb. In this case, the first checkout apparatus 12-1 functions as, together with the corresponding registration apparatus 11, a checkout apparatus configuring a semi-self-type transaction processing system, and the second checkout apparatus 12-2 functions as, together with the communication terminal 2 and the virtual POS server 14, a checkout apparatus configuring an individual-input-type transaction processing system. Therefore, after inputting data on the product being purchased using the communication terminal 2 by himself/herself at the selling space, the customer can pay for the product being purchased by himself/herself with the second checkout apparatus 12-2 by scanning a checkout barcode displayed on the display device of the communication terminal 2 with the scanner 37 of the second checkout apparatus 12-2.

Also, the third mode setting key 63 of the second checkout apparatus 12-2, for example, is operated to change the operation mode to the third mode Mc. In this case, the first checkout apparatus 12-1 functions as, together with the corresponding registration apparatus 11, a checkout apparatus configuring a semi-self-type transaction processing system, and the second checkout apparatus 12-2 functions as a checkout apparatus configuring a continuous-input-type transaction processing system. Therefore, through utilizing the second checkout apparatus 12-2, the customer can collectively perform a process from inputting of data regarding the product being purchased to paying for the product by himself/herself.

The second checkout apparatus 12-2, which has been changed to the second mode Mb or the third mode Mc, can be returned to the first mode Ma by operating the first mode setting key 61. That is, the second checkout apparatus 12-2 can function as a semi-self-type checkout apparatus.

In this manner, the checkout apparatus 12 according to the present embodiment is capable of switching between functioning as a semi-self-type checkout apparatus and functioning as an individual-input-type or continuous-input-type checkout apparatus through a simple key operation. Therefore, it is possible to easily realize a management in which, for example, the checkout apparatuses are used as semi-self-type checkout apparatuses during busy times when there are many customers to speed up customer handling, but are used as individual-input-type or continuous-input-type checkout apparatuses during off-peak times when there are few customers to reduce the number of employees.

Also, if, for example, the second checkout apparatus 12-2 is functioning as an individual-input-type or continuous-input-type checkout apparatus, the status data S of the status memory 322 is in the status Sb. Upon receiving a status request command from the registration apparatus 11, the second checkout apparatus 12-2 sends back status data S in the status Sb to the registration apparatus 11. Upon receiving the response, the registration apparatus 11 does not transmit settlement data to the second checkout apparatus 12-2. Therefore, a problem never occurs in which the registration apparatus 11 transmits settlement data to the second checkout apparatus 12-2 functioning as an individual-input-type or continuous-input-type checkout apparatus.

It is to be noted that an input via the first mode setting key 61 is enabled if the second settlement engine program 52 or the third settlement engine program 53 is in an idle state. An input via the second mode setting key 62 is enabled if the first settlement engine program 51 or the third settlement engine program 53 is in an idle state. An input via the third mode setting key 63 is enabled if the first settlement engine program 51 or the second settlement engine program 52 is in an idle state. Therefore, a problem never occurs in which an operation mode of the checkout apparatus 12 is switched in the course of a settlement process, causing an error in the settlement process.

### [Second Embodiment]

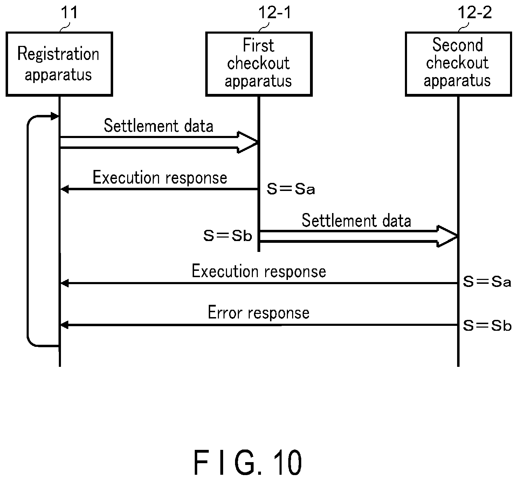

Next, the second embodiment will be described with reference to FIGS. 10 to 14.

The second embodiment differs from the first embodiment in terms of the sequence of communications performed between a registration apparatus 11, a first checkout apparatus 12-1, and a second checkout apparatus 12-2 configuring a semi-self-type transaction processing system. Since the configuration of the transaction processing system of the second embodiment is the same as that of the first embodiment, FIG. 1 will be adopted without change in the second embodiment, too.

FIG. 10 is a sequence diagram according to the second embodiment.

In a semi-self type, data regarding products being purchased by a customer is input on the registration apparatus 11. After inputting of data regarding all the products being purchased is completed, the registration apparatus 11 transmits settlement data to the first checkout apparatus 12-1. The settlement data is data necessary for the checkout apparatus 12 to handle payment for the products being purchased. The settlement data includes at least a product code and the number of items of each product being purchased. If an input is made to discount or reduce a subtotal of the transaction, the settlement data also includes a discount amount or a reduction rate. The settlement data is an example of the data regarding a first product being purchased.

Upon receiving the settlement data, the first checkout apparatus 12-1 confirms the status data S stored in the status memory 322. If the status data S is in the status Sa, namely, if a settlement process can be executed, an execution response command is transmitted to the registration apparatus 11. The first checkout apparatus 12-1 executes a settlement process in response to an operation input by a customer.

If the status data S is in the status Sb, namely, if a settlement process cannot be executed, the first checkout apparatus 12-1 transmits (forwards) settlement data to the second checkout apparatus 12-2. Upon receiving the settlement data, the second checkout apparatus 12-2 confirms the status data S stored in the status memory 322. If the status data S is in the status Sa, namely, if a settlement process can be executed, an execution response command is transmitted to the registration apparatus 11. The second checkout apparatus 12-2 executes a settlement process in response to an operation input by a customer.

If the status data S is in the status Sb, namely, if a settlement process cannot be executed, the second checkout apparatus 12-2 transmits an error response command to the registration apparatus 11. Upon receiving the error response command, the registration apparatus 11 transmits settlement data to the first checkout apparatus 12-1 again. In this manner, if one of the first checkout apparatus 12-1 and the second checkout apparatus 12-2 becomes capable of executing a settlement process, a settlement process is executed in the checkout apparatus 12 (the first checkout apparatus 12-1 or the second checkout apparatus 12-2) which has received the settlement data.

It is to be noted that, upon receiving an execution response command, the registration apparatus 11 causes the display device to display information specifying the checkout apparatus 12 (the first checkout apparatus 12-1 or the second checkout apparatus 12-2) which has transmitted the execution response command. A store employee, who is an operator of the registration apparatus 11, can instruct the customer to pay for the products being purchased with the checkout apparatus 12 specified by the displayed information.

The checkout apparatus 12 that transmits settlement data to the registration apparatus 11 first is not limited to the first checkout apparatus 12-1. Settlement data may be transmitted to the second checkout apparatus 12-2 first, and if the second checkout apparatus 12-2 cannot execute the settlement process, the second checkout apparatus 12-2 may transmit (forward) settlement data to the first checkout apparatus 12-1.

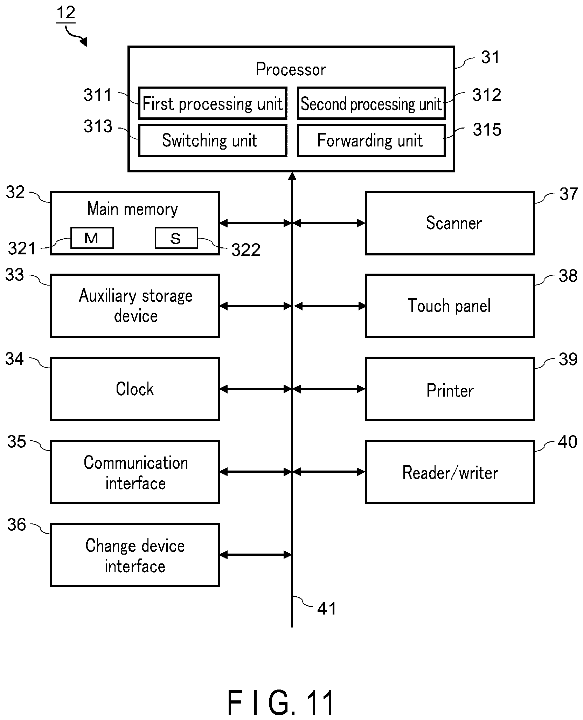

FIG. 11 is a block diagram showing a main circuit configuration of the checkout apparatus 12 according to the second embodiment. The portions that are the same as those of FIG. 2 in which the main circuit configuration of the checkout apparatus 12 according to the first embodiment is shown are denoted by identical reference numerals, and detailed descriptions thereof will be omitted.

The checkout apparatus 12 of the second embodiment differs from that of the first embodiment in terms of a function of the processor 31. That is, in place of the function as the response unit 314 equipped in the first embodiment, the processor 31 is equipped with a forwarding unit 315 in the second embodiment. The forwarding unit 315 has a function of forwarding, if the second processing unit 312 is enabled to handle the payment, data regarding the first product being purchased received from the registration apparatus 11 to another checkout apparatus.

The checkout apparatus 12 with the above-described configuration has a program structure shown in the schematic diagram of FIG. 3, similarly to the first embodiment. The procedure for information processing executed by the processor 31 of the checkout apparatus 12 in accordance with the mode setting program 54 is similar to that of the first embodiment. Therefore, FIG. 6 will also be adopted without change in the second embodiment.

On the other hand, the procedure for information processing executed by the processor 31 in accordance with the first settlement engine program 51, the second settlement engine program 52, and the third settlement engine program 53 partially differs from that of the first embodiment. The procedure will be described in sequence.

### <<Description of Operation of Checkout Apparatus based on First Settlement Engine Program>>

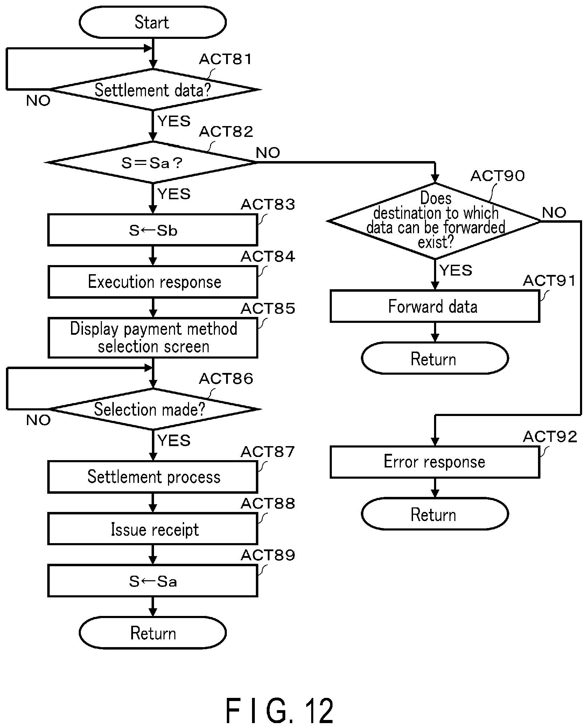

FIG. 12 is a flowchart showing a procedure for information processing executed by the processor 31 of the checkout apparatus 12 in accordance with the first settlement engine program 51. While the first settlement engine program 51 is in an idle state after start-up, the processor 31 waits for settlement data at ACT81. As described with reference to FIG. 4, the settlement data is transmitted from the registration apparatus 11 or another checkout apparatus 12.

Upon receiving the settlement data, the processor 31 determines YES at ACT81, and advances to ACT82. The processor 31 checks, at ACT82, the status data S stored in the status memory 322. If the status data S is in the status Sa, namely, if a settlement process can be executed, the processor 31 determines YES at ACT82, and advances to ACT83. The processor 31 temporarily brings the status data S to the status Sb at ACT83. The processor 31 transmits, at ACT84, an execution response command to the registration apparatus 11. Thereafter, the processor 31 makes the screen of the touch panel 38 a payment method selection screen at ACT85.

The procedure for the subsequent processing from ACT86 to ACT89 is identical to that from ACT27 to ACT30 of the first embodiment described with reference to FIG. 7. Accordingly, a description thereof will be omitted.

Upon completing the processing at ACT89, the processor 31 ends the information processing according to the first settlement engine program 51. The first settlement engine program 51 returns to an idle state. Accordingly, the processor 31 waits for settlement data at ACT81 again.

On the other hand, if the status data S at the time of receiving the settlement data is in the status Sb, namely, if a settlement process cannot be executed, the processor 31 determines NO at ACT82, and advances to ACT90. The processor 31 confirms, at ACT90, whether or not another checkout apparatus exists as a destination to which the settlement data can be forwarded. In the sequence example of FIG. 10, a second checkout apparatus 12-2 exists as a destination to which the settlement data can be forwarded from the first checkout apparatus 12-1. However, there is no other checkout apparatus as a destination to which the settlement data can be forwarded from the second checkout apparatus 12-2.

If a destination to which the settlement data can be forwarded exists, the processor 31 determines YES at ACT90, and advances to ACT91. The processor 31 transmits (forwards), at ACT91, the settlement data to another checkout apparatus, which is a destination to which the settlement data can be forwarded. If there is no destination to which the settlement data can be forwarded, the processor 31 determines NO at ACT90, and advances to ACT92. The processor 31 transmits, at ACT92, an error response command to the registration apparatus 11.

Upon completing the processing at ACT91 or ACT92, the processor 31 ends the information processing according to the first settlement engine program 51. The first settlement engine program 51 returns to an idle state. Accordingly, the processor 31 waits for settlement data at ACT81 again.

Thus, through the execution of the processing at ACT87, the processor 31 realizes the function as the first processing unit 311. Through the execution of the processing at ACT91, the processor 31 realizes the function as the forwarding unit 315.

### <<Description of Operation of Checkout Apparatus based on Second Settlement Engine Program>>

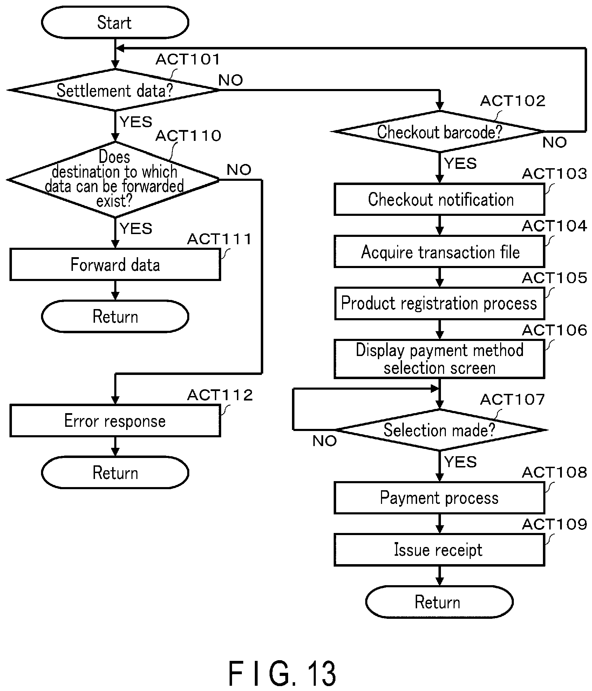

FIG. 13 is a flowchart showing a procedure for information processing executed by the processor 31 of the checkout apparatus 12 in accordance with the second settlement engine program 52. If the second settlement engine program 52 is in an idle state after start-up, the processor 31 confirms, at ACT101, whether or not settlement data has been received. If the settlement data has not been received, the processor 31 determines NO at ACT101, and advances to ACT102. The processor 31 confirms, at ACT102, whether or not a checkout barcode has been scanned by the scanner 37. If the checkout barcode has not been scanned, the processor 31 determines NO at ACT102, and returns to ACT101. In this manner, if the second settlement engine program 52 is in an idle state, the processor 31 waits until settlement data is received or a checkout barcode is scanned.

If the checkout barcode is scanned at the waiting state at ACT101 and ACT102, the processor 31 determines YES at ACT102, and advances to ACT103. Thereafter, the processor 31 executes, at ACT103 to ACT109, a process identical to ACT45 to ACT51 of the first embodiment described with reference to FIG. 8. Accordingly, a description thereof will be omitted.

Upon completing the processing at ACT109, the processor 31 ends the information processing according to the second settlement engine program 52. The second settlement engine program 52 returns to an idle state. Accordingly, the processor 31 is brought to the waiting state at ACT101 and ACT102 again.

Upon receiving the settlement data at the waiting state at ACT101 and ACT102, the processor 31 determines YES at ACT101, and advances to ACT110. The processor 31 confirms, at ACT110, whether or not another checkout apparatus exists as a destination to which the settlement data can be forwarded. If a destination to which the settlement data can be forwarded exists, the processor 31 determines YES at ACT110, and advances to ACT111. The processor 31 transmits (forwards), at ACT111, the settlement data to another checkout apparatus to which the settlement data can be forwarded. If there is no destination to which the settlement data can be forwarded, the processor 31 determines NO at ACT110, and advances to ACT112. The processor 31 transmits, at ACT112, an error response command to the registration apparatus 11.

Upon completing the processing at ACT111 or ACT112, the processor 31 ends the information processing according to the second settlement engine program 52. The second settlement engine program 52 returns to an idle state. Accordingly, the processor 31 is brought to the waiting state at ACT101 and ACT102 again.

Thus, through the execution of the processing at ACT108, the processor 31 realizes the function as the second processing unit 312. Through the execution of the processing at ACT111, the processor 31 realizes the function as the forwarding unit 315.

### <<Description of Operation of Checkout Apparatus based on Third Settlement Engine Program>>

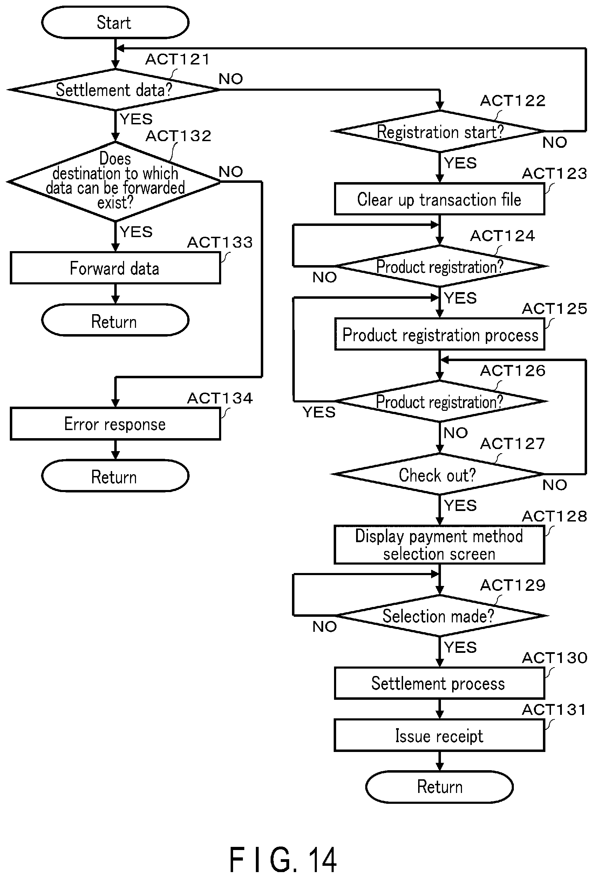

FIG. 14 is a flowchart showing a procedure for information processing executed by the processor 31 of the checkout apparatus 12 in accordance with the third settlement engine program 53. If the third settlement engine program 53 is in an idle state after start-up, the processor 31 confirms, at ACT121, whether or not settlement data has been received. If the settlement data has not been received, the processor 31 determines NO at ACT121, and advances to ACT122. The processor 31 confirms, at ACT122, whether or not a statement operation to start registration has been performed. If a statement operation to start registration has not been performed, the processor 31 determines NO at ACT122, and returns to ACT121. In this manner, if the third settlement engine program 52 is in an idle state, the processor 31 waits until settlement data is received or a statement operation to start registration is performed.

If a statement operation to start registration has been performed at the waiting state at ACT121 and ACT122, the processor 31 determines YES at ACT122, and advances to ACT123. Thereafter, the processor 31 executes, at ACT123 to ACT131, a process identical to that at ACT65 to ACT73 of the first embodiment described with reference to FIG. 9. Accordingly, a description thereof will be omitted.

Upon completing the processing at ACT131, the processor 31 ends the information processing according to the third settlement engine program 53. The third settlement engine program 53 returns to an idle state. Accordingly, the processor 31 is brought to the waiting state at ACT121 and ACT122 again.

Upon receiving the settlement data at the waiting state at ACT121 and ACT122, the processor 31 determines YES at ACT121, and advances to ACT132. The processor 31 confirms, at ACT132, whether or not another checkout apparatus exists as a destination to which the settlement data can be forwarded. If a destination to which the settlement data can be forwarded exists, the processor 31 determines YES at ACT132, and advances to ACT133. The processor 31 transmits (forwards), at ACT133, the settlement data to another checkout apparatus to which the settlement data can be forwarded. If there is no destination to which the settlement data can be forwarded, the processor 31 determines NO at ACT132, and advances to ACT134. The processor 31 transmits, at ACT13, an error response command to the registration apparatus 11.

Upon completing the processing at ACT133 or ACT134, the processor 31 ends the information processing according to the third settlement engine program 53. The third settlement engine program 53 returns to an idle state. Accordingly, the processor 31 is brought to the waiting state at ACT121 and ACT122 again.

Thus, through the execution of the processing at ACT130, the processor 31 realizes the function as the second processing unit 312, similarly to the case of executing the processing at ACT108 in FIG. 13. Also, through the execution of the processing at ACT133, the processor 31 realizes the function as the forwarding unit 315.

In this manner, the checkout apparatus 12 according to the second embodiment described above is capable of switching between functioning as a semi-self-type checkout apparatus and functioning as an individual-input-type or continuous-input-type checkout apparatus through a simple key operation.

### [Other Embodiments]

In the above-described embodiments, a case has been exemplified where a checkout apparatus 12 is equipped with a first settlement engine program 51, a second settlement engine program 52, a third settlement engine program 53, and a mode setting program 54. Such a configuration may be modified in such a manner that the checkout apparatus 12 is equipped with both of the first settlement engine program 51 and the mode setting program 54, but is equipped with only one of the second settlement engine program 52 or the third settlement engine program 53. Even in this case, the checkout apparatus 12 equipped with, for example, the second settlement engine program 52 can be switched, through a simple operation, between being utilized as a checkout apparatus in a semi-self-type transaction processing system and being utilized as a checkout apparatus in an individual-input-type transaction processing system. Similarly, the checkout apparatus 12 equipped with the third settlement engine program 53 can be switched, through a simple operation, between being utilized as a checkout apparatus in a semi-self-type transaction processing system and being utilized as a checkout apparatus in a continuous-input-type transaction processing system.

In the description of the operation of the checkout apparatus 12 based on the mode setting program, a case has been described in the above-described embodiments where the processor 31 brings, at ACT1, the mode data M in the mode memory 321 to the first mode Ma corresponding to a semi-self-type transaction processing system first. Such a configuration may be modified in such a manner that the processor 31 brings, at ACT7, the mode data M in the mode memory 321 to the second mode Mb corresponding to an individual-input-type transaction processing system first. Alternatively, the processor 31 brings, at ACT13, the mode data M in the mode memory 321 to the third mode Mc corresponding to a continuous-input-type transaction processing system.

In the above-described embodiments, a case has been exemplified where two checkout apparatuses are connected to a single registration apparatus; however, the number of checkout apparatuses connected to the registration apparatus may be one, or more than two. The number of checkout apparatuses to be connected to the registration apparatus is flexibly determined according to the scale of the store.

The programs according to the present embodiment may be transferred in a state of being stored in an electronic device, or may be transferred in a state of not being stored in an electronic device. In the latter case, the programs may be transferred via a network, or may be transferred in a state of being recorded in a recording medium. The recording medium is a non-temporary tangible medium. The recording medium is a computer-readable medium. The recording medium may be a medium in any form that can store programs and can be read by a computer, such as a CD-ROM, a memory card, etc.

The embodiments of the present invention described above are presented as examples, and are not intended to limit the scope of the invention. Such novel embodiments may be implemented in various other forms, and a variety of omissions, substitutions, and changes may be made within the scope of not departing from the gist of the invention. Such embodiments and their modifications are encompassed by the scope of the invention, as well as the invention recited in the claims and their equivalents.

## Claims

1. A checkout apparatus configuring a system together with a registration apparatus with which data regarding one or more products being purchased is input, and configured to handle payment for the one or more products being purchased, comprising:
a first processing unit configured to handle, based on data regarding a first product being purchased input with the registration apparatus, payment for the first product being purchased;
a second processing unit configured to handle, based on data regarding a second product being purchased input with a terminal or a device other than the registration apparatus, payment for the second product being purchased; and
a switching unit configured to switch between, according to an operation input via an operating element, enabling the first processing unit to handle the payment and enabling the second processing unit to handle the payment.

2. The checkout apparatus according to claim 1, wherein
the system includes a plurality of checkout apparatuses, and
the registration apparatus is configured to transmit the input data regarding the first product being purchased to one of the plurality of checkout apparatuses, the checkout apparatus further comprising:
a response unit configured, if the second processing unit is enabled to handle the payment, to make a response indicating that transmission of the data regarding the first product being purchased from the registration apparatus is not to be accepted.

3. The checkout apparatus according to claim 1, wherein
the system includes a plurality of checkout apparatuses, and
the registration apparatus is configured to transmit the input data regarding the first product being purchased to one of the plurality of checkout apparatuses, the checkout apparatus further comprising:
a forwarding unit configured to forward, if the second processing unit is enabled to handle the payment, the data regarding the first product being purchased received from the registration apparatus to another checkout apparatus.

4. The checkout apparatus according to any one of claims 1 to 3, wherein
the data regarding the second product being purchased, for which the payment is handled by the second processing unit, is data regarding a product being purchased input with a terminal operated by a customer in a selling space.

5. The checkout apparatus according to any one of claims 1 to 3, wherein
the data regarding the second product being purchased, for which the payment is handled by the second processing unit, is data regarding a product being purchased input from an input device included in the checkout apparatus.

6. A program recording medium recording thereon a program for causing a computer of a checkout apparatus configuring a system together with a registration apparatus with which data regarding one or more products being purchased is input, and configured to handle payment for the one or more products being purchased to function as:
a first processing unit configured to handle, based on data regarding a first product being purchased input with the registration apparatus, payment for the first product being purchased;
a second processing unit configured to handle, based on data regarding a second product being purchased input with a terminal or a device other than the registration apparatus, payment for the second product being purchased; and
a switching unit configured to switch between, according to an operation input via an operating element, enabling the first processing unit to handle the payment and enabling the second processing unit to handle the payment.

7. A checkout processing method performed by a checkout apparatus configuring a system together with a registration apparatus with which data regarding one or more products being purchased is input, and configured to handle payment for the one or more products being purchased, the method comprising:
switching between enabling, based on data regarding a first product being purchased input with the registration apparatus, payment for the first product being purchased and enabling, based on data regarding a second product being purchased input with a terminal or a device other than the registration apparatus, payment for the second product being purchased, according to an operation input via an operating element.
